# EUROPEAN PATENT APPLICATION

(11) **EP 4 663 385 A1**
(43) Date of publication of application: **17.12.2025**
(21) Application number: 24182128.9
(22) Date of filing: 13.06.2024
(51) Int. Cl.: B29C 64/277, B29C 64/282, B29C 64/129, B29C 64/135, B33Y 10/00

(54) **AN APPARATUS FOR VOLUMETRIC 3D-PRINTING A THREE-DIMENSIONAL OBJECT BY MULTI-COLOR PHOTOPOLYMERIZATION OF A PHOTOCURABLE RESIN**

(71) Applicant: xolo GmbH, 12489 Berlin (DE)
(72) Inventor: Garmshausen, Yves, 12489 Berlin (DE); Reuter, Marcus, 12489 Berlin (DE)
(74) Representative: Hafner & Kohl PartmbB

(57) **Abstract**

An apparatus for volumetric 3d-printing a three-dimensional object by multi-color photopolymerization of a photocurable resin.

## Description

### Field of invention

The invention relates to an apparatus for volumetric 3d-printing a three-dimensional object by multi-color photopolymerization, particularly by dual-color photopolymerization, of a photocurable resin, wherein the apparatus comprises a working volume for receiving a photocurable resin, an irradiation device for irradiating a photocurable resin within the working volume with light of a first wavelength and light of a second wavelength, different from the first wavelength, wherein the light of the first wavelength and the light of the second wavelength intersect in at least one formation zone.

### Background Art

Respective apparatuses for volumetric 3d-printing a three-dimensional object by multi-color photopolymerization, particularly by dual-color photopolymerization, of a photocurable resin are generally known from the prior art. Concrete embodiments of respective apparatuses which implement principles known as xolography are specified in WO 2020/245456 A1, for instance.

The irradiation device of respective apparatuses is generally configured to irradiate a photocurable resin within a respective working volume with light of a first wavelength and light of a second wavelength, different from the first wavelength, wherein the light of the first wavelength and the light of the second wavelength intersect in at least one formation zone in which the photocurable resin is solidified to form at least a part of the three-dimensional object to be printed. Typically, respective irradiation apparatuses comprise a light sheet generator which is configured to form a light sheet from the light of the first wavelength which extends through the working volume.

To improve the quality of the printable three-dimensional objects, embodiments of respective apparatuses have been proposed which comprise multiple light sources of the light of the first wavelength which enables generating multiple light sheets, respectively which extend in different directions through the working volume and overlap in a light sheet overlapping zone. Particularly, the setup of respective irradiation devices comprises multiple light sources of the light of the first wavelength and multiple light sheet generators each including light sheet generating optics, accordingly such that the setup of respective irradiation devices is rather complex. This particularly, applies as it is desired that the light sheets have the same properties. As an example, the multiple light sources must have identical configurations such that the light emitted by each of the multiple light sources should have the exact same wavelength, which can require a complex adjustment of the multiple light sources. As another example, the control of the multiple light sources and respectively assigned light sheet generators can be complex as the operation of the multiple light sources and the respectively assigned light sheet generators must be adjusted, e.g. by synchronization. Further, the provision of multiple light sources and multiple light sheet generators can require comparatively much installation space. Finally, the provision of multiple light sources and multiple light sheet generators is costly.

Hence, there is a need to provide an apparatus for volumetric 3d-printign which overcomes the above drawbacks and particularly, enables generating multiple light sheets with an irradiation device having an efficient setup.

It is therefore, the object of the invention to provide an improved apparatus for volumetric 3d-printing of a three-dimensional object by multi-color photopolymerization of a photocurable resin.

### Summary of the invention

A first aspect of the invention relates to an apparatus for volumetric 3d-printing at least one three-dimensional object by multi-color photopolymerization, particularly by dual-color photopolymerization, of a photocurable resin. The apparatus is thus, generally configured to form at least one three-dimensional object via volumetric 3d-printing based on multi-color photopolymerization, particularly dual-color polymerization, of a photocurable resin. A respective three-dimensional object can be a technical component or form part of a technical component, for instance. As an example, a technical component can be an optical component or form part of an optical component. As an example, a respective optical component can be a diffractive element, a transmissive element, or a lens element, for instance. The term "three-dimensional object" thus, particularly refers to a technical component which is generally ready to be used (except for possible post-processing steps).

The apparatus is thus, configured to implement at least one irradiation process which comprises irradiating a photocurable resin with light of a first wavelength and light of a second wavelength, which is different from the first wavelength, within a working volume to form, by multi-color photopolymerization, particularly by dual-color photopolymerization, at least one three-dimensional object in at least one formation zone. The three-dimensional object to be printed is typically, formed in at least one direction which can be or comprise a formation direction of the respective three-dimensional object to be printed, i. e. the or a direction in which the respective three-dimensional object is printed. The apparatus is generally, configured for volumetric 3d-printing of one or more three-dimensional objects in the at least one formation direction.

The light of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum or range of wavelengths, particularly at least partly covering the respective ranges. As a concrete example, the first wavelength can be ca. 375 nm. Typically, the first wavelength will be chosen at least under consideration of the photochemical properties, particularly the photochromic properties, of molecules of at least one photoinitiator of the photocurable resin.

The light of the second wavelength can comprise a wavelength in the range of: 400 nm - 1000 nm, particularly 425 - 750 nm, more particularly 450 - 675 nm, more particularly 500 -650 nm, for instance. The light of the second wavelength can comprise a spectrum or range of wavelengths, particularly at least partly covering the respective ranges. As an example, the second wavelength can be ca. 475 nm. Preferably, the light of the second wavelength can comprise a wavelength in a spectrum or range which does not include the first wavelength. Typically, the second wavelength will be chosen at least under consideration of the photochemical properties, particularly the photochromic properties, of molecules of at least one photoinitiator of the photocurable resin.

Typically, the photocurable resin is irradiated with the light of the first wavelength and, particularly simultaneously, the light of the second wavelength and can absorb the light of the first and/or second wavelength. Particularly, the photocurable resin is irradiated with the light of the first wavelength and the light of the second wavelength such that the light of the first wavelength and the light of the second wavelength intersect in the at least one formation zone. As such, the light of the first wavelength can be irradiated into the photocurable resin at a different angle relative to the light of the second wavelength. As an example, the light of the first wavelength can be irradiated into the working volume at an angle of ca. 90° relative to the light of the second wavelength. The at least one formation zone is typically, the zone in which the photopolymerization of the photocurable resin takes place which results in photocuring and solidification, respectively of the photocurable resin and forming at least a cross-section of the three-dimensional object to be printed.

Particularly, irradiating the photocurable resin with the light of the first wavelength causes one or more photoinitiator molecules of the photocurable resin to transfer from an initial state into an intermediate state with changed optical properties compared to the initial state, such that the photoinitiator molecules in the intermediate state can absorb the light of the second wavelength which results in that at least some of the photoinitiator molecules are transferred from the intermediate state to a reactive state by absorption of light of the second wavelength which locally triggers the polymerization of the photocurable resin to form at least one three-dimensional object.

As an example, the photocurable resin can be a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin. Photopolymerization of the photocurable resin is typically, effected by irradiating the photocurable resin with the light of the first wavelength and, particularly simultaneously, the light of the second wavelength, which differs from the first wavelength, which results in that the photoinitiator molecules of the photocurable resin are converted, e.g., due to the absorption of the light of the first wavelength, from an initial state in which the photoinitiator molecules (substantially) do not absorb the light of the second wavelength, into an intermediate state with changed optical properties compared to the initial state, such that the photoinitiator molecules in the intermediate state absorb the light of the second wavelength which results in that the photoinitiator molecules are transferred from the intermediate state to a reactive state which locally triggers the polymerization of the photocurable resin to form at least one three-dimensional object.

A back reaction of the photoinitiator molecules from the intermediate state into the initial state can be thermally induced, for instance. Hence, the intermediate state may return thermally at the printing temperature of the photocurable resin to the initial state. Preferably, the intermediate state may return thermally at the respective printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed three-dimensional object.

Alternatively, the intermediate state may substantially not return thermally at the respective printing temperature of the photocurable resin to the initial state. Preferably, the intermediate state may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state may substantially not return thermally at the printing temperature of the photocurable resin to the initial state. Preferably, the intermediate state may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Suitable photoinitiators of a respective photocurable resin are e. g. specified in US5230986A, WO2020245456A1, WO2023034398A1, WO2023034404A1, WO2023034402A1, WO2023220461A1, WO2023220463A1, the contents of which are incorporated herein by reference.

The apparatus comprises a working volume for receiving a respective photocurable resin. The working volume can be delimited by a container of the apparatus. Particularly, the container can comprise one or more walls, such as e.g. one or more side-walls, one or more bottom-walls, one or more top-walls (typically, arranged opposite to the one or more bottom-walls), delimiting a container volume which corresponds to the working volume. The one or more walls of the container, particularly respective side-walls and bottom-walls, can be made of a material which enables irradiating the photocurable resin inside the container with the light of the first and the light of the second wavelength. A respective material can be a transparent material, for instance. A respective transparent material can be glass or a polymer, such as e.g. polycarbonate, polymethylmethacrylate, or cyclic olefin copolymer, for instance.

The container can be moveably, i.e. particularly at least translatorily, supported in at least one direction. The at least one direction can be or comprise the formation direction of a respective three-dimensional object to be printed. A drive device, such as e.g. a motor, can be assigned to the container to effect a motion, particularly a translational motion, of the container in the at least one formation direction. Particularly, the at least one formation direction can comprise a direction towards the at least one second light source. Operation of the at least one drive device can be controlled by a superordinate controller of the apparatus, for instance.

The apparatus further comprises an irradiation device, such as e.g. a multi-color irradiation device, particularly a dual-color irradiation device, for irradiating the photocurable resin within the working volume with light of the first wavelength and light of the second wavelength, different from the first wavelength, wherein the light of the first wavelength and the light of the second wavelength intersect in at least one formation zone. The irradiation device is thus, generally configured to, particularly simultaneously, irradiate the photocurable resin within the working volume with respective light of a first wavelength and respective light of a second wavelength as specified above.

The irradiation device can comprise at least one first light source, particularly only a single first light source, for generating the light of the first wavelength. Particularly, the first light source can be a combination of two or more light sources such that the light of the at least two light sources at least partially overlaps. More particularly, the light of respective two or more light sources can be combined, e.g. by a beam combining device, such as e.g. at least one beam combining lens, to form a combined light beam. The at least one first light source is particularly, configured to emit light of the first wavelength which can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum or range of wavelengths, particularly at least partly covering the respective ranges. As a concrete example, the first wavelength can be ca. 375 nm. One or more optical elements, such as e.g. at least one of: a Powell-lens, a cylindrical lens, a transmissive optical element, a reflective optical element, a diffractive optical element, a beam expanding element, a collimating optical element, etc., can be assigned to the at least one first light source.

Further, the irradiation device can comprise at least one second light source for generating the light of the second wavelength. The at least one second light source is particularly, configured to emit light of the second wavelength which can comprise a wavelength in the range of 400 nm - 1000 nm, particularly 425 - 750 nm, more particularly 450 - 675 nm, more particularly 500 -650 nm, for instance. The light of the second wavelength can comprise a spectrum or range of wavelengths, particularly at least partly covering the respective ranges. As an example, the second wavelength can be ca. 475 nm. Preferably, the light of the second wavelength can comprise a wavelength in a spectrum or range which does not include the first wavelength. One or more optical elements, such as e.g. at least one of: a transmissive optical element, a reflective optical element, a diffractive optical element, a beam expanding element, a collimating optical element, etc., can be assigned to the at least one second light source.

The at least one first light source is configured to generate a light beam, particularly a collimated light beam, of the light of the first wavelength. Particularly, the at least one first light source is configured to generate a single light beam of the light of the first wavelength. The at least one first light source can thus, be built as or comprise a laser or light emitting diode, for instance. As such, the at least one first light source can be generally configured to generate non-divergent or divergent light of the first wavelength. Particularly, the at least one first light source can comprise at least two lasers or light emitting diodes, wherein the light emitted from each of the lasers or light emitting diodes is combined to generate a single light beam, wherein a single light beam can be understood such, that the light of at least two lasers or light emitting diodes at least partially overlaps.

The irradiation device further comprises a light sheet generator (which can also be deemed or denoted a light sheet generator device), wherein the light sheet generator is configured to process the or a light beam of the light of the first wavelength generated by the at least one first light source to generate at least three individual light sheets, particularly at least four individual light sheets of the light of the first wavelength. The light sheet generator can thus, be generally configured to modify the or a light beam of the light of the first wavelength as generated and/or emitted by the at least one first light source to generate at least three individual light sheets, particularly at least four individual light sheets which extend through the working volume at one or more angles relative to each other, e.g. based on principles of at least one of: beam deflecting, beam splitting, or beam shaping. as will be apparent from further below, the light sheet generator can be configured to modify the or a light beam of the light of the first wavelength as generated and/or emitted by the at least one first light source to simultaneously or sequentially generate at least three individual light sheets, particularly at least four individual light sheets which extend through the working volume at one or more angles relative to each other. Hence, the light sheet generator can generally be configured, to generate at least three individual light sheets, particularly at least four individual light sheets with a temporal and/or spatial offset relative to each other.

Generally, any aspects of the invention set forth in connection with the generation of at least three individual light sheets can be applied to the generation of at least four individual light sheets and vice versa.

In either embodiment, each respective individual light sheet generatable or generated by the light sheet generator can comprise multiple light beams, particularly multiple (substantially) parallel light beams, traversing the working volume in at least one light plane. As will be apparent from further below, the respective light planes of each individual light sheet can at least partially overlap within the working volume in at least one light sheet overlapping zone. The at least three individual light sheets generatable or generated by the light sheet generator can thus, extend in a common plane within and/or through the working volume. The at least three individual light sheets generatable or generated by the light sheet generator can thus, overlap in a light sheet overlapping zone within the working volume. The at least three individual light sheets generatable or generated by the light sheet generator can form a resulting light sheet within the light sheet overlapping zone. Notably, the light sheet overlapping zone can be or comprise the at least one formation zone.

Additionally or alternatively, each respective individual light sheet of the at least three individual light sheets can comprise a main extension direction through the working volume. The main extension direction of each respective individual light sheet generatable or generated by the light sheet generator can be the extension direction of the respective individual light sheet between two opposing sides of the working volume or a container delimiting the working volume, respectively. Hence, the light sheet generator can be configured to generate at least three individual light sheets, wherein the main extension directions of the respective individual light sheets extend through the working volume at one or more angles, particularly angles of ca. 90°, relative to each other. The main extension directions of the individual light sheets typically, intersect in the respective light sheet overlapping zone.

Each of the at least three individual light sheets can have a homogeneous intensity distribution or an inhomogeneous intensity distribution. A homogenous intensity distribution can particularly, refer to a (substantially) constant intensity distribution in one or more directions across the cross-section of the working volume. In other words, a homogenous intensity distribution can particularly, refer to a (substantially) constant intensity distribution across outer regions of the working volume, such as e.g. regions adjacent or close to a side-wall of a container, and inner regions of the working volume, such as e.g. regions adjacent or close to a center of the container. A homogenous intensity distribution thus, minimizes or at least reduces intensity deviations across the cross-section of the working volume and, since respective intensity deviations can compromise the quality of the photopolymerization or solidification process, can improve the quality of the printing process.

Particularly, a homogenous intensity distribution of a respective light sheet can refer to difference in intensity which is absorbed in each volume element of the photocurable resin for a static absorbance of the photocurable resin, e.g. difference between center and edge or corner of the working volume below 10% of higher value, which could be measured using a fluorophore and measuring the fluorescence intensity from top-view, for instance. Accordingly, the resulting light sheet within the light sheet overlapping zone can have a homogeneous intensity distribution or an inhomogeneous intensity distribution. Particularly, a homogeneous intensity distribution of the resulting light sheet within the light sheet overlapping zone can be generated by overlapping of at least three individual light sheets each having a specific intensity distribution, for instance.

The setup of the irradiation device of the apparatus specified herein is thus, particularly when compared with the setups of known apparatuses for volumetric 3d-printing which enable generating multiple light sheets as specified further above, rather simple as it only comprises at least one first light source, particularly only a single first light source, configured to generate a light beam of the light of the first wavelength and a light sheet generator configured to process the light beam of the light of the first wavelength generated and/or emitted by the at least one first light source to generate at least three individual light sheets of the light of the first wavelength such that an improved apparatus for volumetric 3d-pritning of at least one three-dimensional object is given. Particularly, the multiple light sheets have the same emission wavelengths and/or are not distinguishable by their respective emission wavelengths.

In exemplary embodiments, the irradiation device can further comprise an optical reflector (which can also be deemed or denoted an optical reflector device) which can be configured to direct the at least three individual light sheets generated by the light sheet generator towards and/or through the working volume such that each of the at least three individual light sheets can enter or enters the working volume at a specific angle and such that the at least three individual light sheets can overlap or overlap within the working volume in a respective light sheet overlapping zone. The optical reflector is thus, generally assigned to the at least one first light source and therefore, arranged in the optical path of the light first wavelength. Hence, the irradiation device can comprise an optical train of the light of the first wavelength which at least comprises at least the at least one first light source, the light sheet generator, and the optical reflector.

The optical reflector can generally comprise one or more optical reflector elements which are configured to, particularly by optical reflection, direct the at least three individual light sheets generated by the light sheet generator towards and/or through the working volume such that each of the at least three individual light sheets can enter or enters the working volume at a specific angle and such that the at least three individual light sheets can overlap or overlap within the working volume in a respective light sheet overlapping zone. Respective one or more optical reflector elements can comprise a plane shape or curved shape, for instance. Respective optical reflector elements can be or comprise mirror elements, particularly micro-mirror elements, for instance. One or more further optical elements, particularly embodied as respective optical lenses, such as e.g. beam collimating elements, beam focusing elements, beam widening elements, etc., can be directly or indirectly assigned to the optical reflector and each respective optical reflector element of the optical reflector, respectively.

The one or more optical reflector elements can be arranged so as to at least partially surround the working volume, particularly respective side-walls or side-wall portions of a container delimiting the working volume. Hence, multiple discrete optical reflector elements, each facing a side wall of a container delimiting the working volume, which at least partially or completely surround at least a portion of a container delimiting the working volume can be provided. As an example, a first optical reflector element can be arranged adjacent to a first side-wall or first side-wall portion of a respective container, a second optical reflector element can be arranged adjacent to a second side-wall or second side-wall portion of the respective container, a third optical reflector element can be arranged adjacent to a third side-wall or third side-wall portion of the respective container, and a fourth optical reflector element can be arranged adjacent to a fourth side-wall or fourth side-wall portion of the respective container. Hence, the light sheet generator can be generally configured to generate the at least four light sheets such that their respective main extension planes are parallel to a bottom-side of the working volume or parallel to a bottom-wall of a container delimiting the working volume, respectively. As such, also the main extension plane of the light sheet overlapping zone can be parallel to a bottom-side of the working volume or parallel to a bottom-wall of a container delimiting the working volume, respectively.

Respective optical reflector elements can be moveable in at least one degree of freedom of motion, such as e.g. a translational and/or a rotational degree of freedom of motion, for instance, relative to the working volume. As such, at least one drive device, such as e.g. a motor, can be assigned to the one or more optical reflector elements to effect a motion of the respective optical reflector elements in the respective degree of freedom of motion. Operation of the at least one drive device can be controlled by at least one controller of the irradiation device and/or a superordinate controller of the apparatus, respectively, for instance.

Particularly, the optical reflector can be configured to direct the at least three individual light sheets such that the at least three individual light sheets enter the working volume through different walls, particularly different side-walls, or different wall portions, particularly different side-wall portions, of a respective container delimiting the working volume. As such, a first individual light sheet of the at least three individual light sheets can enter the working volume through a first wall, particularly a first side-wall, or a first wall portion, particularly a first side-wall portion, of the container, a second individual light sheet of the at least three individual light sheets can enter the working volume through a second wall, particularly a second side-wall, or a second wall portion, particularly a second side-wall portion, of the container, a third individual light sheet of the at least four individual light sheets can enter the working volume through a third wall, particularly a third side-wall, or a third wall portion, particularly a third side-wall portion, of the container, and a fourth individual light sheet of the at least four individual light sheets can enter the working volume through a fourth wall, particularly a fourth side-wall, or a fourth wall portion, particularly a fourth side-wall portion, of the container. Respective first, second, third, and fourth walls, particularly first, second, third, and fourth side-walls, of the container or respective first, second, third, and fourth wall portions, particularly first, second, third, and fourth side-wall portions, of the container can be arranged and/or oriented at angles of e.g. 90° relative to each other, for instance.

As such, the irradiation device can be generally configured to generate at least four individual light sheets, wherein the main extension direction of a first individual light sheet extends at a first angle through the photocurable resin, the main extension direction of a second individual light sheet extends at an angle of 1 - 179°, particularly at an angle of essentially 120° (for at least three individual light sheets) or 90° (for at least four individual light sheets), relative to the first individual light sheet through the photocurable resin, the main extension direction of a third individual light sheet extends at an angle of 1 - 179°, particularly at an angle of essentially 90°, relative to the second individual light sheet through the photocurable resin, and the main extension direction of a fourth individual light sheet extends at an angle of 1 - 179°, particularly at an angle of essentially 90°, relative to the third individual light sheet through the photocurable resin.

In an alternative embodiment, the irradiation device can form or generate at least three individual light sheets, wherein at least a first individual light sheet extends at a first angle through the photocurable resin, e.g. with respect to a base plane of the working volume or a wall of a container delimiting the working volume, a second individual light sheet extends at an angle of 1 - 179°, particularly at an angle of essentially 120,° relative to the first individual light sheet through the photocurable resin, and a third individual light sheet extends at an angle of 1 - 179°, particularly at an angle of essentially 120°, relative to the second individual light sheet through the photocurable resin. As such, the irradiation device can form or generate at least three individual light sheets, wherein at least a first individual light sheet has a main extension direction extending at a first angle through the photocurable resin, e.g. with respect to a base plane of the working volume or a wall of a container delimiting the working volume, a second individual light sheet has a main extension extending at an angle of 1 - 179°, particularly at an angle of essentially 120,° relative to the first individual light sheet through the photocurable resin, and a third individual light sheet has a main extension direction extending at an angle of 1 - 179°, particularly at an angle of essentially 120°, relative to the second individual light sheet through the photocurable resin.

According to another exemplary embodiment, the container can have a triangular base or base-shape, particularly the container can have three at least partially transparent side walls. Preferably, the angle between each two side-walls of the container is 60°.

Particularly, the above example of forming at least three separate individual light sheets can be particularly, beneficial because it enables a compensation for drawbacks based on intensity losses over the penetration. However, the same generally applies to all other numbers of individual light sheets and related angles as well.

At least the above example of forming at least three separate individual light sheets can be a separate, individual and independent aspect of the invention which is generally independent from controlling the intensity distribution of the plurality of individual light sheets such that an inhomogeneous intensity distribution of the resulting light sheet is achieved in at least parts of the working volume and thus, applies also to aiming at a (substantially) homogeneous distribution of the resulting light sheet in at least parts of the working volume.

Generally, all embodiments referring to at least four individual light sheets can also apply to embodiments referring to at least three individual light sheets and vice versa.

In further exemplary embodiments, the irradiation device comprises at least one second light source of the light of the second wavelength and a light projector configured to generate one or more light projections of the light of the second wavelength. The one or more light projections of the light of the second wavelength can comprise one or more images, particularly images corresponding to a cross-sectional geometry of a three-dimensional object to be printed, or a plurality of sequential light points, particularly light points each corresponding to a point of a cross-sectional geometry of a three-dimensional object to be printed, for instance. Typically, the one or more light projections of the light of the second wavelength intersect the at least three individual light sheets generated by the light sheet generator at a specific angle, particularly at an angle of 90°. As such, particularly given that the at least three individual light sheets can enter the working volume through respective side-walls or side-wall portions of a container delimiting the working volume, the one or more light projections of the light of the second wavelength can enter the working volume through a top-wall or a bottom-wall of the container. The at least one second light source of the light of the second wavelength and the light projector configured to generate one or more light projections of the light of the second wavelength, respectively can thus, be arranged adjacent a top-wall or a bottom-wall of the container such that the light of the second wavelength can enter the working volume through the top-wall or the bottom-wall of the container, respectively.

Generally, the one or more light projections can enter the working volume at or through a specific side of the working volume, such as e.g. a top-side or a bottom-side of working volume. The light sheet generator can be arranged at a side of the working volume which is different from the specific side of the working volume. As an example, the light sheet generator can be arranged at a side of the working volume which is opposite the specific side of the working volume. As a more concrete example, the at least one second light source of the light of the second wavelength and the light projector configured to generate one or more light projections of the light of the second wavelength, respectively can be arranged at a bottom-side of the working volume (below the working volume) and thus, adjacent to a bottom-wall of a respective container and the light sheet generator can be arranged at a top-side of the working volume (above the working volume) and thus, adjacent to a top-wall of a respective container. Also, an inverse configuration is conceivable.

In further exemplary embodiments, the light sheet generator is configured to generate the at least three individual light sheets simultaneously or sequentially. Hence, the light sheet generator can be configured to generate the at least three individual light sheets simultaneously which can be beneficial for generating a high light intensity at least in the light sheet overlapping zone which can positively influence the curing or solidification behavior of the photocurable resin, for instance. Alternatively, the light sheet generator can be configured to generate the at least three individual light sheets sequentially, i.e. with a temporal and/or spatial offset, which can be beneficial for generating a variable light intensity at least in the light sheet overlapping zone which can also positively influence, particularly control, the curing or solidification behavior of the photocurable resin, for instance.

In further exemplary embodiments, the light sheet generator can be or comprise at least one beam deflection device, particularly a controllable beam deflection device, configured to deflect a light beam of the light of the first wavelength towards the at least one optical reflector. Embodiments of a respective beam deflection device can be or comprise an optical scanner device, particularly a galvo-scanner device, or a digital micro-mirror device, for instance. The provision of a respective beam deflection device does not only enable a deliberate deflection of a light beam of the light of the first wavelength towards different positions of a specific optical reflector element of the optical reflector but can also enable a deliberate deflection of a light beam of the light of the first wavelength towards different optical elements of the optical reflector which enables a concerted generation of light sheets which enter the working volume from different directions. As an example, the beam deflection device can be configured to sequentially deflect a light beam of the light of the first wavelength to and/or across different optical reflector elements of the optical reflector. As a more concrete example, the beam deflection device can be configured to sequentially deflect a light beam of the light of the first wavelength to and/or across at least three or at least four different optical elements of the optical reflector, wherein a first light sheet is generated by deflecting the light beam, which can also be widened, e.g. in a sheet-like configuration, via the beam deflection device, towards and/or across a first optical reflector element and reflecting the (widened) first light beam towards a first side of the working volume or a first side-wall or side-wall portion of a respective container, respectively, a second light sheet is generated by deflecting the light beam, which can also be widened, e.g. in a sheet-like configuration, via the beam deflection device, towards and/or across a second optical reflector element and reflecting the (widened) light beam towards a second side of the working volume or a second side-wall or side-wall portion of a respective container, respectively, a third light sheet is generated by deflecting the light beam, which can also be widened, e.g. in a sheet-like configuration, via the beam deflection device, towards and/or across a third optical reflector element and reflecting the (widened) light beam towards a third side of the working volume or a third side-wall or side-wall portion of a respective container, respectively, and, optionally, a fourth light sheet is generated by deflecting the light beam, which can also be widened, e.g. in a sheet-like configuration, via the beam deflection device, towards and/or across a fourth optical reflector element and reflecting the (widened) light beam towards a fourth side of the working volume or a fourth side-wall or side-wall portion of a respective container, respectively.

In exemplary embodiments in which the light sheet generator is or comprises a controllable beam deflection device, such as e.g. an optical scanner device or a digital micro-mirror device, the controllable beam deflection device can also be configured to generate a light beam having a specific beam profile which can correspond to or result in a specific intensity distribution of one, more, or all of the at least three individual light sheets generated from that light beam. As an example, the controllable beam deflection device can be controlled, via a controller, to generate or modify a beam profile of an incident light beam which can result in a specific intensity distribution of one, more, or all of the at least three individual light sheets generated from that light beam. As another example, the controllable beam deflection device can be controlled, via a controller, by applying grey-scaling to an incident light beam which can result in a specific intensity distribution of one, more, or all of the at least three individual light sheets generated from that light beam.

Hence, the apparatus can generally comprise at least one intensity distribution device configured to distribute, particularly substantially homogenously distribute, the intensity of the light of the first wavelength, throughout at least parts of the working volume, particularly in the or a light sheet overlapping zone of the at least three individual light sheets. As indicated above, the at least one intensity distribution device can also be embodied by a respective controllable beam deflection device which can be controlled, via a controller, e.g. by applying grey-scaling to an incident light beam which can result in a specific intensity distribution of one, more, or all of the at least three individual light sheets generated from that light beam. Further conceivable embodiments of a respective intensity distribution device can be or comprise an optical intensity filter, e.g. a variable neutral density filter, which can be arranged in the optical path of the light of the first wavelength between the first light source and the container, respectively. Further conceivable embodiments of a respective intensity distribution device comprise the or a controller of the light sheet generator, the or a controller of a respective beam deflection device, such as e.g. an optical scanner device, etc., or other optical elements of the light sheet generator, such as e.g. lenses, particularly cylindrical lenses, for instance. As such, implementing a respective intensity distribution can also generally comprise, particularly under control of the or a controller of the light sheet generator, pulsing a laser beam, controlling operational parameters, such as e.g. speed, of an optical scanner device, etc.

In further exemplary embodiments, the beam deflection device can be generally configured to generate an at least partially non-collimated light beam from the light beam of the first wavelength and deflect the at least partially non-collimated light beam towards the optical reflector or one or more optical reflector elements of the optical reflector, respectively. Particularly, the beam deflection device can be configured to generate a light beam which is not-collimated in a single spatial direction, e.g. to form a widened light beam having a line-configuration or a sheet-like configuration, respectively. Generating an at least partially non-collimated light beam can be beneficial for generating the at least three individual light sheets.

In further exemplary embodiments, the light sheet generator can, additionally or alternatively, be or comprise at least one beam splitting device configured to, particularly temporally and/or spatially, split a light beam of the light of the first wavelength into at least two split light beams, particularly at least three split light beams, more particularly at least four split light beams, and deflect the at least two, three, or four split light beams towards the optical reflector or respective one or more optical reflector elements of the optical reflector, respectively. Hence, the at least three individual light sheets can be generated by splitting a single light beam in at least two, three, or four split light beams which are then used for generating the respective at least three individual light sheets. As an example, a first split light beam generated by the at least one beam splitting device can be used to generate a first light sheet, a second split light beam generated by the at least one beam splitting device can be used to generate a second light sheet, a third split light beam generated by the at least one beam splitting device can be used to generate a third light sheet, and, optionally, a fourth split light beam generated by the at least one beam splitting device can be used to generate a fourth light sheet, for instance. In exemplary embodiments with multiple beam splitting devices, a first beam splitting device can be configured to split a light beam of the light of the first wavelength into a first and a second split light beam and at least one further beam splitting device can be configured to split the first split light beam into a third and a fourth split light beam and the at least one further beam splitting device can be configured to split the second split light beam into a fifth and a sixth split light beam, wherein the third, fourth, fifth, and sixth split light beams can be used for generating the respective at least three individual light sheets. Hence, in exemplary embodiments with multiple splitting devices, the multiple splitting devices can be arranged in series, for instance. In similar manner, split light sheets could be generated. As such, the light sheet generator can, additionally or alternatively, be or comprise at least one beam splitting device configured to, particularly temporally and/or spatially, split a light sheet of the light of the first wavelength into at least two, three, or four split light sheets and deflect the at least two, three, or four split light sheets towards the optical reflector or respective one or more optical reflector elements of the optical reflector, respectively.

In further exemplary embodiments, the at least one beam splitting device can comprise at least one of the following optical elements, which can generally comprise e.g. lenses, prims, etc.,: one or more diffractive optical elements, one or more transmissive optical elements, one or more reflective optical elements, such as e.g. mirror elements, particularly micro-mirror elements, one or more axicons, one or more mirrors pyramid having a polygonal base shape, one or more optical fibers, particularly optical fibers having an acute free (distal) end, for instance. Each of these optical elements can be moveable in at least one degree of freedom of motion, such as e.g. a translational and/or a rotational degree of freedom of motion, for instance. A respective motion axis, e.g. a translational and/or a rotational axis, can correspond to the extension axis of the incident light beam, for instance. As such, at least one drive device, such as e.g. a motor, can be assigned to one or more respective optical elements to effect a motion of the respective optical elements in the respective degree of freedom of motion. Operation of the at least one drive device can be controlled by at least one controller of the irradiation device and/or a superordinate controller of the apparatus, respectively, for instance.

In exemplary embodiments in which the at least one beam splitting device comprises one or more reflective optical elements, such as e.g. mirror elements, particularly micro-mirror elements, the at least one beam splitting device can be or comprise a digital light projection device or a digital micromirror device, for instance. As such, a digital light projection device or a digital micromirror device can be used as a respective beam splitting device, for instance which can enable generating light sheets of varying properties, e.g. with respect to the intensity distribution, for instance. As an example, a digital light projection device or a digital micromirror device can generate or project at least three lines, particularly at least four lines, which are then optically processed, e.g. by beam shaping or beam widening, to generate at least three individual light sheets, particularly at least four individual light sheets, which are then directed into the working volume.

In further exemplary embodiments, the at least one beam splitting device can be configured to distribute the intensity of the light of the first wavelength to the at least three individual light sheets. Hence, each of the at least three individual light sheets can comprise a fraction, particularly an equal fraction, of the intensity of the light beam from which the at least three individual light sheets have been generated. As such, the at least one beam splitting device can also be used to control the intensity of the respective at least three individual light sheets by applying a concerted distribution of the intensity of the light of the first wavelength to the at least three individual light sheets. Particularly, two or more beam splitting devices can be provided, particularly in a series arrangement, wherein each beam splitting device is configured to split an incoming light beam of the light of the first wavelength having a given intensity in a first split light beam having ca. 50% of the intensity of the incident light beam and in a second split light beam having ca. 50% of the intensity of the incident light beam.

As indicated above, one or more further optical elements, such as e.g. beam collimating elements, beam focusing elements, beam widening elements, etc., can be assigned to each respective optical reflector element of the optical reflector. Hence, in further exemplary embodiments, the apparatus can generally comprise at least one collimating optic comprising one or more collimating elements, such as e.g. collimating lenses, assigned to the light sheet generator and/or to the optical reflector. A respective collimating optic can be particularly, configured to generate light sheets of (substantially) parallel light beams. A respective collimating optic can thus, be configured to generate light sheets of defined optical properties which can be beneficial for printing three-dimensional objects of high-dimensional accuracy. A respective collimating optic can be arranged in the optical path of the light of the first wavelength upstream and/or downstream of the optical reflector or respective optical reflector elements, for instance.

In further exemplary embodiments, the apparatus can comprise at least one beam shaping device configured to provide a light beam emitted by the at least one first light source with a modified beam shape, particularly a modified beam shape in which the light beam is converging or diverging in at least one spatial direction. As such, a respective beam shaping device can be configured to change the shape of a light beam emitted by the at least one first light source so as to generate a light beam which converges or diverges in at least one spatial direction. A respective converging or diverging light beam can then, be processed to generate the at least three individual light sheets, for instance. A respective beam shaping device can be arranged in the optical path of the light of the first wavelength upstream and/or downstream of the light sheet generator and/or upstream or downstream of the optical reflector or respective optical reflector elements, for instance.

As an example, the at least one beam shaping device is or comprises an optical element rotatable about an axis corresponding to the extension direction of the incident light beam of the light of the first wavelength incident on the at least one beam shaping device. The at least one optical element can be a transmissive or a reflective optical element, such as e.g. a mirror element, particularly micro-mirror element, an axicon, a mirror pyramid having a polygonal base shape, an optical fiber, particularly an optical fiber having an acute free (distal) end, for instance.

In further exemplary embodiments, the at least one first light source is arranged on a surface, particularly an inner diameter surface, of a ring or ring-segment, wherein the ring or ring-segment at least partially surrounds the working volume and a container delimiting the working volume, respectively. Hence, multiple discrete rings or ring-segments, each facing a side wall of the container delimiting the working volume, which surround at least a portion of the container delimiting the working volume can be provided. The ring or ring-segment(s) can be generally deemed a carrier structure configured to carry the at least one first light source such that it can emit light of the first wavelength into the working volume. Particularly, the ring or ring-segment and the carrier structure, respectively can be rotatable about a central axis of the working volume or a container delimiting the working volume, respectively. As such, each light sheet of the at least three individual light sheets can be generated by a rotational movement of the at least one first light source relative to the working volume and the container delimiting the working volume, respectively. As an example, an individual light sheet can be generated by a movement of the at least one first light source about a specific angular extension, such as e.g. an angular extension of 90°. A full rotation of the at least one light source about the working volume can thus, generate four individual light sheets. A drive device, such as e.g. a motor, can be assigned to the ring or rings-segment(s) to effect a motion, particularly a rotational motion, of the ring or rings-segment(s) about the working volume or container delimiting the working volume, respectively. Operation of the at least one drive device can be controlled by a superordinate controller of the apparatus, for instance.

In further exemplary embodiments, the apparatus can comprise at least one light blocking element configured to absorb or block the light of the second wavelength, wherein the at least one light blocking element is arranged to avoid that the light of the second wavelength is directed to the light sheet generator. As an example, the at least one light blocking element can be arranged above the working volume when also the light sheet generator is arranged above the working volume. As such, undesired interactions of the light of the second wavelength with e.g. the light sheet generator caused by that the light of the second working volume which exits the working volume at a top-side of the working volume can be avoided. A respective light blocking element can thus, be generally arranged to avoid that light of the second wavelength enters the optical path of the light of the first wavelength outside the working volume.

In further exemplary embodiments, the working volume can be defined by a container having a rotationally symmetric shape, wherein the container is arranged within an outer container, wherein the outer container comprises a refractive index matching medium. Using a container having a rotationally symmetric shape and arranging the container within an outer container which comprises a refractive index matching medium is a measure to avoid possible undesired optical effects, such as e.g. refractive effects, which might compromise the intensity of the light of the first wavelength inside the working volume and thus, inside the photocurable resin. A respective index matching medium can be a fluid having the same or at least a similar refractive index as the wall of the container and/or the photocurable resin.

In either of the exemplary embodiments, the at least one first light source and the light sheet generator, and, if present at least one of: the optical reflector, the at least one beam deflection device, the at least one beam splitting device, the at least one beam shaping device, the at least one intensity distribution device and respectively assigned optical elements, can form part of a first irradiation apparatus of the irradiation device. The first irradiation apparatus can be configured to generate a first optical path or a first optical train of the irradiation device and apparatus, respectively.

In either of the exemplary embodiments, the at least one second light source and the light projector also including assigned optical elements, can form part of a second irradiation apparatus of the irradiation device. The second irradiation apparatus can be configured to generate a second optical path or a second optical train of the irradiation device and apparatus, respectively.

A second aspect of the invention pertains to a method for volumetric 3d-printing a three-dimensional object by multi-color photopolymerization, particularly by dual-color photopolymerization, of a photocurable resin, which method comprises at least irradiating a photocurable resin within a working volume with light of a first wavelength and light of a second wavelength, different from the first wavelength, wherein the light of the first wavelength and the light of the second wavelength intersect in at least one formation zone, wherein an irradiation device is used which comprises at least one first light source, wherein the at least one first light source is configured to generate a light beam of the light of the first wavelength, and a light sheet generator is used, wherein the light sheet generator is configured to process a light beam of the light of the first wavelength generated by the at least one first light source to generate at least three individual light sheets, particularly at least four individual light sheets, of the light of the first wavelength. The method can be implemented with an apparatus according to the first aspect of the invention such that all annotations concerning the apparatus according to the first aspect of the invention also apply to the method according to the second aspect of the invention and vice versa.

In an exemplary embodiment, at least one intensity distribution body can be inserted in the photocurable resin which is configured to distribute the intensity of the light of the first and/or second wavelength within the working volume and thus, configured to minimize or reduce zones of high intensity, e.g. by deflecting the light of the first and/or second wavelength from inner regions of the working volume towards outer regions of the working volume. A respective intensity distribution body can e.g. have a rotationally-symmetric shape, particularly in connection with a working volume which also has a rotationally-symmetric shape and a rotationally-symmetric container delimiting the working volume, respectively. As an example, a respective intensity distribution body can have a rod-like configuration with a rotationally-symmetric cross-section. A respective intensity distribution body can have transmissive-, reflective-, or absorbing-properties with respect to the light of the first and/or the second wavelength, for instance. A respective intensity distribution body can be integrated into and thus, form part of a three-dimensional object to be printed.

### Brief description of the drawings

With these and other advantages and features that will become hereinafter apparent, a more complete understanding of the invention can be obtained by referring to the following description of the appended drawings in which:

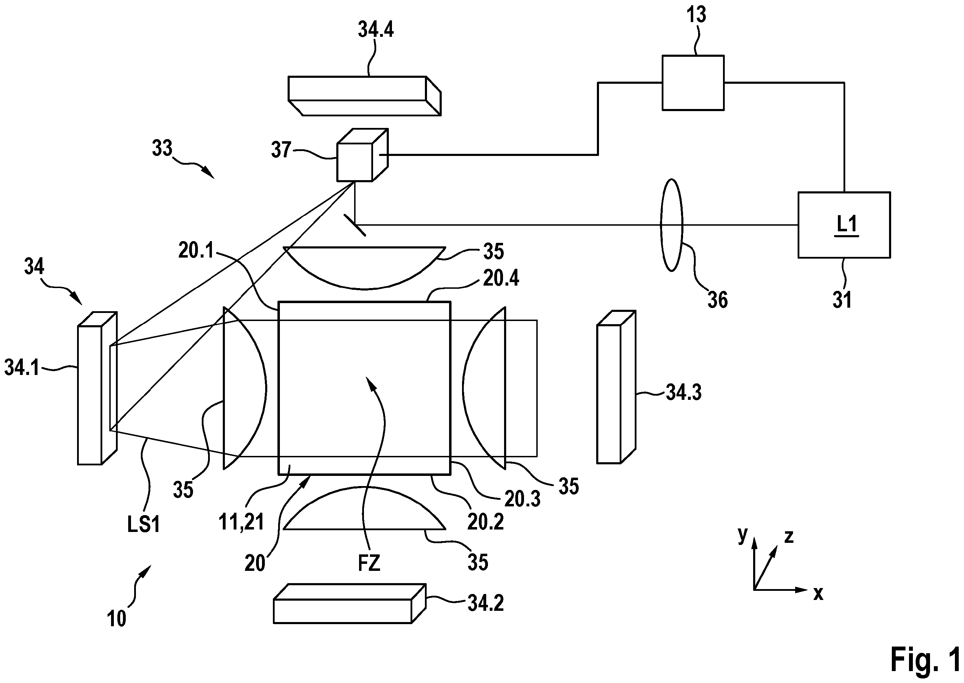

Fig. 1 - 6 each shows a principle drawing of at least parts of an apparatus for printing at least one three-dimensional object according to an exemplary embodiment.

### Detailed description of the drawings

Fig. 1 shows a principle drawing of at least parts of an apparatus 10 for printing at least one three-dimensional object according to an exemplary embodiment in a schematic top-view.

The apparatus 10 is generally configured to form at least one three-dimensional object via volumetric 3d-printing based on multi-color photopolymerization, particularly dual-color polymerization, of a photocurable resin. A respective three-dimensional object can be a technical component or form part of a technical component, for instance. As an example, a technical component can be an optical component or form part of an optical component. As an example, a respective optical component can be a diffractive element, a transmissive element, or a lens element, for instance. The term "three-dimensional object" thus, particularly refers to a technical component which is generally ready to be used (except for possible post-processing steps). Notably, further post-processing steps, particularly at least one of washing, thermal post-curing, or irradiation post-curing, can be performed prior to use of the three-dimensional object.

The apparatus 10 is thus, configured to implement at least one irradiation process which comprises irradiating a photocurable resin with light L1 of a first wavelength and light L2 of a second wavelength, which is different from the first wavelength, within a working volume 11 to form, by multi-color photopolymerization, particularly by dual-color photopolymerization, at least one three-dimensional object in at least one formation zone FZ. The three-dimensional object to be printed is typically, formed in at least one direction which can be or comprise a formation direction of the respective three-dimensional object to be printed, i. e. the or a direction in which the respective three-dimensional object is printed. The apparatus 10 is generally, configured for volumetric 3d-printing of one or more three-dimensional objects in the at least one formation direction.

The light L1 of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum or range of wavelengths, particularly at least partly covering the respective ranges. As a concrete example, the first wavelength can be ca. 375 nm. Typically, the first wavelength will be chosen at least under consideration of the photochemical properties, particularly the photochromic properties, of photoinitiator molecules of the photocurable resin.

The light L2 of the second wavelength can comprise a wavelength in the range of: 400 nm - 1000 nm, particularly 425 - 750 nm, more particularly 450 - 675 nm, more particularly 500 -650 nm, for instance. The light L2 of the second wavelength can comprise a spectrum or range of wavelengths, particularly at least partly covering the respective ranges. As an example, the second wavelength can be ca. 475 nm. Preferably, the light L2 of the second wavelength can comprise a wavelength in a spectrum or range which does not include the first wavelength. Typically, the second wavelength will be chosen at least under consideration of the photochemical properties, particularly the photochromic properties, of photoinitiator molecules of the photocurable resin.

Typically, the photocurable resin is irradiated with the light L1 of the first wavelength and, particularly simultaneously, the light L2 of the second wavelength and can absorb the light L1, L2 of the first and/or second wavelength. Particularly, the photocurable resin is irradiated with the light L1 of the first wavelength and the light L2 of the second wavelength such that the light L2 of the first wavelength and the light L2 of the second wavelength intersect in the at least one formation zone FZ. As such, the light L1 of the first wavelength can be irradiated into the photocurable resin at a different angle relative to the light L2 of the second wavelength. As an example, the light L1 of the first wavelength can be irradiated into the working volume 11 at an angle of ca. 90° relative to the light L2 of the second wavelength. The at least one formation FZ zone is typically, the zone of the working volume FZ in which the photopolymerization of the photocurable resin takes place which results in photocuring and solidification, respectively of the photocurable resin and forming at least a cross-section of the three-dimensional object to be printed.

Particularly, irradiating the photocurable resin with the light L1 of the first wavelength causes one or more photoinitiator molecules of the photocurable resin to transfer from an initial state into an intermediate state with changed optical properties compared to the initial state, such that the photoinitiators molecules in the intermediate state can absorb the light L2 of the second wavelength which results in that the photoinitiators molecules are transferred from the intermediate state to a reactive state by absorption of light L2 of the second wavelength which locally triggers the polymerization of the photocurable resin to form at least one three-dimensional object.

As an example, the photocurable resin can be a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin. Photopolymerization of the photocurable resin is typically, effected by irradiating the photocurable resin with the light L1 of the first wavelength and, particularly simultaneously, the light L2 of the second wavelength, which differs from the first wavelength, which results in that the photoinitiator molecules of the photocurable resin are converted, e.g., due to the absorption of the light L1 of the first wavelength, from an initial state in which the photoinitiator molecules (substantially) do not absorb the light L2 of the second wavelength, into an intermediate state with changed optical properties compared to the initial state, such that the photoinitiator molecules in the intermediate state absorb the light L2 of the second wavelength which results in that the photoinitiator molecules are transferred from the intermediate state to a reactive state which locally triggers the polymerization of the photocurable resin to form at least one three-dimensional object.

A back reaction of the photoinitiator molecules from the intermediate state into the initial state can be thermally induced, for instance. Hence, the intermediate state may return thermally at the printing temperature of the photocurable resin to the initial state. Preferably, the intermediate state may return thermally at the respective printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed three-dimensional object.

Alternatively, the intermediate state may substantially not return thermally at the respective printing temperature of the photocurable resin to the initial state. Preferably, the intermediate state may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state may substantially not return thermally at the printing temperature of the photocurable resin to the initial state. Preferably, the intermediate state may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Suitable photoinitiators of a respective photocurable resin are e. g. specified in US5230986A, WO2020245456A1, WO2023034398A1, WO2023034404A1, WO2023034402A1, WO2023220461A1, WO2023220463A1, the contents of which are incorporated herein by reference.

As is apparent from above, the apparatus 10 comprises a working volume 11 for receiving a respective photocurable resin. The working volume 11 is delimited by a container 20 of the apparatus 10. Particularly, the container 20 can comprise one or more walls 20.1 - 20.6, such as e.g. one or more side-walls 20.1 - 20.4, one or more bottom-walls 20.5, one or more top-walls 20.6 (typically, arranged opposite to the one or more bottom-walls), delimiting a container volume 21 which corresponds to the working volume 11. The one or more walls 20.1 - 20.6 of the container 20, particularly respective side-walls 20.1 - 20.4 and bottom-walls 20.5, can be made of a material which enables irradiating the photocurable resin inside the container 20 with the light L1 of the first and/or the light L2 of the second wavelength. A respective material can be a transparent material, for instance. A respective transparent material can be glass or a polymer, such as e.g. polycarbonate, polymethylmethacrylate, or cyclic olefin copolymer, for instance.

The container 20 can be moveably, i.e. particularly at least translatorily, supported in at least one direction. The at least one direction can be or comprise the formation direction of a respective three-dimensional object to be printed. A drive device (not shown), such as e.g. a motor, can be assigned to the container 20 to effect a motion, particularly a translational motion, of the container 20 in the at least one formation direction. Particularly, the at least one formation direction can comprise a direction towards at least one second light source 32 which is configured to emit the light L2 of the second wavelength. Operation of the at least one drive device can be controlled by a superordinate controller 13 of the apparatus 10, for instance.

The apparatus 10 further comprises an irradiation device 30, such as e.g. a multi-color irradiation device, particularly a dual-color irradiation device, for irradiating the photocurable resin within the working volume 11 with the light L1 of the first wavelength and the light L2 of the second wavelength, different from the first wavelength, wherein the light L1 of the first wavelength and the light L2 of the second wavelength intersect in the at least one formation zone FZ. The irradiation device 30 is thus, generally configured to, particularly simultaneously, irradiate the photocurable resin within the working volume 11 with respective light L1 of a first wavelength and respective light L2 of a second wavelength as specified above.

The irradiation device 30 can comprise a first light source 31, particularly only a single first light source, for generating the light L1 of the first wavelength which can comprise a wavelength in the range of: 350 nm - 500 nm, particularly 375 nm - 450 nm, more particularly 385 nm - 440 nm, more particularly 395 nm-420, more particularly 400 nm-410 nm, for instance. As a concrete example, the first wavelength can be ca. 375 nm.

Further, the irradiation device 30 can comprise a second light source 32 for generating the light L2 of the second wavelength which can comprise a wavelength in the range of 400 nm - 1000 nm, particularly 425 - 750 nm, more particularly 450 - 675 nm, more particularly 500 - 650 nm, for instance. As an example, the second wavelength can be ca. 475 nm.

Notably, the first light source 31 is configured to generate a light beam, particularly a collimated light beam, of the light L1 of the first wavelength. Particularly, the first light source 31 is configured to generate a single light beam of the light L1 of the first wavelength. The first light source 31 can thus, be built as or comprise a laser or light emitting diode, for instance. As such, the first light source 31 can be generally configured to generate non-divergent or divergent light of the first wavelength.

The irradiation device 30 further comprises a light sheet generator 33 (which can also be deemed or denoted a light sheet generator device), wherein the light sheet generator 33 is configured to process the or a light beam of the light L1 of the first wavelength emitted by the first light source 31 to generate at least four individual light sheets LS1 - LS4 of the light L1 of the first wavelength. The light sheet generator 33 is thus, generally configured to modify the or a light beam of the light L1 of the first wavelength as generated by the first light source 31 to generate at least four individual light sheets L1 - L4 which extend through the working volume 11 at one or more angles relative to each other, e.g. based on principles of at least one of: beam deflecting, beam splitting, or beam shaping. As will be apparent from further below, the light sheet generator 33 can be configured to modify the light beam of the light L1 of the first wavelength as emitted by the first light source 31 to simultaneously or sequentially generate at least four individual light sheets LS1 - LS4 which extend through the working volume 11 at one or more angles relative to each other. Hence, the light sheet generator 33 can generally be configured, to generate at least four individual light sheets LS1 - LS4 with a temporal and/or spatial offset relative to each other.

Each respective individual light sheet LS1 - LS4 generatable or generated by the light sheet generator 30 can comprise multiple light beams, particularly multiple (substantially) parallel light beams, traversing the working volume 11 in at least one light plane. As will be apparent from further below, the respective light planes of each individual light sheet LS1 - LS4 can at least partially overlap within the working volume 11 in at least one light sheet overlapping zone OZ. The at least four individual light sheets LS1 - LS4 generatable or generated by the light sheet generator 30 can thus, extend in a common plane within and/or through the working volume 11. The at least four individual light sheets LS1 - LS4 generatable or generated by the light sheet generator 30 can thus, overlap in a light sheet overlapping zone OZ within the working volume 11. The at least four individual light sheets LS1 - LS4 generatable or generated by the light sheet generator 30 can form a resulting light sheet within the light sheet overlapping zone OZ. Notably, the light sheet overlapping zone OZ can be or comprise the at least one formation zone FZ.

Additionally or alternatively, each respective individual light sheet LS1 - LS4 of the at least four individual light sheets generatable or generated by the light sheet generator 30 can comprise a main extension direction through the working volume 11. The main extension direction of each respective individual light sheet LS1 - LS4 can be the extension direction of the respective individual light sheet between two opposing sides of the working volume 11 or the container 20, respectively. Hence, the light sheet generator 30 can be configured to generate at least four individual light sheets LS1 - LS4, wherein the main extension directions of the respective individual light sheets LS1 - LS4 extend through the working volume 11 at one or more angles, particularly angles of ca. 90°, relative to each other. The main extension directions of the individual light sheets LS1 - LS4 typically, intersect in the respective light sheet overlapping zone OZ.

The main extension direction of each respective individual light sheet, a light beam or a light stripe can be generally understood as the extension direction of the respective individual light sheet, light beam or light stripe between opposing walls or wall portions of a container delimiting the working volume. Particularly, the main extension direction of each respective individual light sheet, light beam or light stripe can be understood as the main propagation direction of the light of the individual light sheet, the light beam or the light stripe between opposing walls or wall portions of a container delimiting the working volume. Hence, the main extension direction of each respective individual light sheet, light beam, or light stripe can correspond to a direction along a line which halves the divergence or divergence angle, respectively of the individual light sheet, the light beam or the light stripe within the working volume.

The height direction or height extension of each respective individual light sheet, light beam or light stripe can be generally understood as the direction with maximum spatial extension which extends orthogonal to the main extension direction. Particularly, the height direction or height extension can be a direction parallel to a wall or wall portion of a container delimiting the working volume through which wall or wall portion, respectively the individual light sheet, light beam or light stripe enters the working volume.

The width direction or width extension of each respective individual light sheet, light beam or light stripe can be generally understood as the direction which extends orthogonal to both the main extension direction and the height direction.

Each of the at least four individual light sheets LS1 - LS4 can have a homogeneous intensity distribution or an inhomogeneous intensity distribution. A homogenous intensity distribution can particularly, refer to a (substantially) constant intensity distribution in one or more directions across the cross-section of the working volume 11 (see e.g. x-y plane in the Fig.). In other words, a homogenous intensity distribution can particularly, refer to a (substantially) constant intensity distribution across outer regions of the working volume 11, such as e.g. regions adjacent or close to a side-wall 20.1 - 20.4 of the container 20, and inner regions of the working volume 11, such as e.g. regions adjacent or close to a center of the container 20. A homogenous intensity distribution thus, minimizes or at least reduces intensity deviations across the cross-section of the working volume 11 and, since respective intensity deviations can compromise the quality of the photopolymerization or solidification process, can improve the quality of the printing process.

Particularly, a homogenous intensity distribution of a respective light sheet LS1 - LS4 can refer to difference in intensity which is absorbed in each volume element of the photocurable resin for a static absorbance of the photocurable resin, e.g. difference between center and edge or corner of the working volume 11 below 50% of higher value, particularly below 10% of higher value, more particularly below 1% of higher value, which could be measured using a fluorophore and measuring the fluorescence intensity from top-view, for instance. Accordingly, the resulting light sheet within the light sheet overlapping zone OZ can have a homogeneous intensity distribution or an inhomogeneous intensity distribution. Particularly, a homogeneous intensity distribution of the resulting light sheet within the light sheet overlapping zone OZ can be generated by overlapping of four individual light sheets LS1 - LS4 each having a specific intensity distribution, for instance.

The setup of the irradiation device 30 of the apparatus 10 is thus, particularly when compared with the setups of known apparatuses for volumetric 3d-printing which enable generating multiple light sheets as specified further above, rather simple as it only comprises a (single) first light source 31 configured to generate a light beam of the light L1 of the first wavelength and a light sheet generator 33 configured to process the light beam of the light L1 of the first wavelength generated or emitted by the first light source 31 to generate at least four individual light sheets LS1 - LS4 of the light L1 of the first wavelength such that an improved apparatus for volumetric 3d-pritning of at least one three-dimensional object is given.

At least in the exemplary embodiments of Fig. 1 - 4, the irradiation device 30 further comprises an optical reflector 34 (which can also be deemed or denoted an optical reflector device) which is configured to direct the at least four individual light sheets LS1 -LS4 generated by the light sheet generator 33 towards and/or through the working volume 11 such that each of the at least four individual light sheets LS1 - LS4 can enter or enters the working volume 11 at a specific angle and such that the at least four individual light sheets LS1 - LS4 can overlap or overlap within the working volume 11 in a respective light sheet overlapping zone OZ. The optical reflector 34 is thus, generally assigned to the first light source 31 and therefore, arranged in the optical path of the light L1 first wavelength. Hence, the irradiation device 30 can comprise an optical train of the light L1 of the first wavelength which at least comprises at least the first light source 31, the light sheet generator 33, and the optical reflector 34.

The optical reflector 34 can generally comprise one or more optical reflector elements 34.1 - 34.4 which are configured to, particularly by optical reflection, direct the at least four individual light sheets LS1 - LS4 generated by the light sheet generator 33 towards and/or through the working volume 11 such that each of the at least four individual light sheets LS1 - LS4 can enter or enters the working volume 11 at a specific angle and such that the at least four individual light sheets LS1 - LS4 can overlap or overlap within the working volume 11 in a respective light sheet overlapping zone OZ. Respective optical reflector elements 34.1 - 34.4 can comprise a plane shape or curved shape, for instance. Respective optical reflector elements 34.1 - 34.4 can be or comprise mirror elements, particularly micro-mirror elements, for instance. One or more further optical elements, particularly embodied as respective optical lenses, such as e.g. beam collimating elements 35, beam focusing elements, beam widening elements 36, etc., can be directly or indirectly assigned to the optical reflector 34 and each respective optical reflector element 34.1 - 34.4 of the optical reflector 34, respectively.

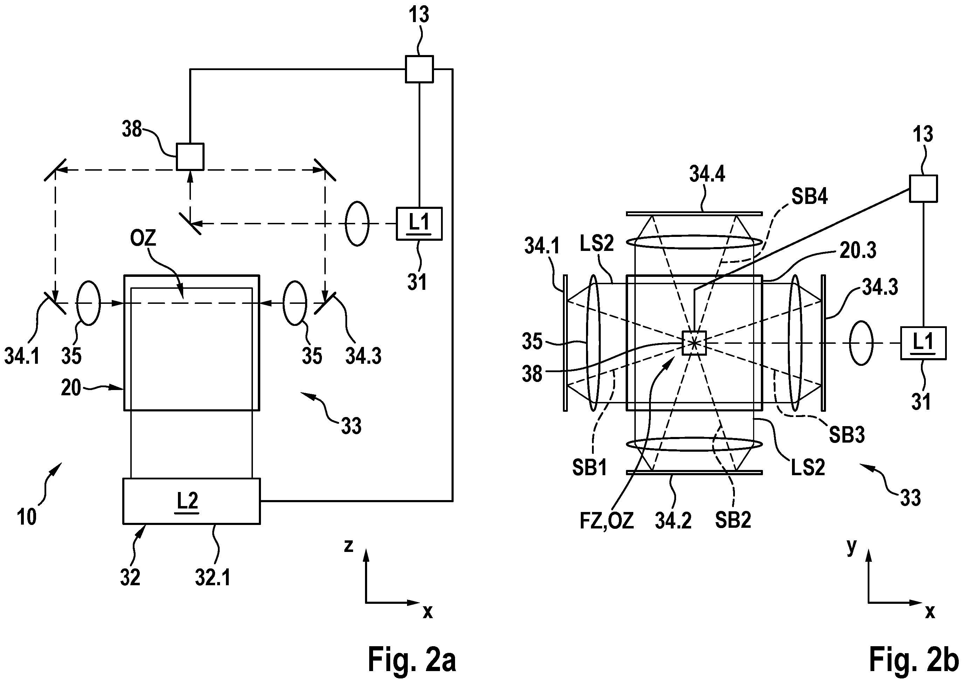

The optical reflector elements 34.1 - 34.4 can be arranged so as to at least partially surround the working volume 11, particularly respective side-walls 20.1 - 20.4 or side-wall portions of the container 20 delimiting the working volume 11. Hence, multiple discrete optical reflector elements 34.1 - 34.4, each facing a side wall 20.1 - 20.4 of the container 20, which at least partially or completely surround at least a portion of the container 20 can be provided. As an example shown in Fig. 1 - 3 (wherein Fig. 2a, 2b show side-views of the apparatus 10 and Fig. 1, 2b, 3b show top-views of the apparatus 10), a first optical reflector element 34.1 can be arranged adjacent to a first side-wall 20.1 or first side-wall portion of the container 20, a second optical reflector element 34.2 can be arranged adjacent to a second side-wall 20.2 or second side-wall portion of the container 20, a third optical reflector element 34.3 can be arranged adjacent to a third side-wall 20.3 or third side-wall portion of the container 20, and a fourth optical reflector element 34.4 can be arranged adjacent to a fourth side-wall 20.4 or fourth side-wall portion of the container 20. Hence, the light sheet generator 33 can be generally configured to generate the at least four light sheets LS1 - LS4 such that their respective main extension planes are parallel to the bottom-side of the working volume 11 or parallel to the bottom-wall 20.5 of the container 20, respectively. As such, also the main extension plane of the light sheet overlapping zone OZ can be parallel to the bottom-side of the working volume 11 or parallel to the bottom-wall 20.5 of the container 20, respectively.

Respective optical reflector elements 34.1 - 34.4 can be moveable in at least one degree of freedom of motion, such as e.g. a translational and/or a rotational degree of freedom of motion, for instance, relative to the working volume 11. As such, at least one drive device (not shown), such as e.g. a motor, can be assigned to the one or more optical reflector elements 34.1 - 34.4 to effect a motion of the respective optical reflector elements 34.1 - 34.4 in the respective degree of freedom of motion. Operation of the at least one drive device can be controlled by at least one controller of the irradiation device 30 and/or the superordinate controller 13 of the apparatus 10, respectively, for instance.

As is apparent from e.g. Fig. 1 - 3, the optical reflector 34 can be configured to direct the at least four individual light sheets LS1 - LS4 such that the at least four individual light sheets LS1 - LS4 enter the working volume 11 through different side-walls 20.1 - 20.4 or different side-wall portions of the container 20. As such, a first individual light sheet LS1 can enter the working volume 11 through a first side-wall 20.1 or a first side-wall portion of the container 20, a second individual light sheet LS2 can enter the working volume 11 through a second side-wall 20.2 or a second side-wall portion of the container 20, a third individual light sheet LS3 can enter the working volume 11 through a third side-wall 20.3 or a third side-wall portion of the container 20, and a fourth individual light sheet LS4 can enter the working volume 11 through a fourth side-wall 20.4 or a fourth side-wall portion of the container 20. Respective first, second, third, and fourth side-walls 20.1 - 20.4 of the container 20 or respective first, second, third, and fourth side-wall portions of the container 20 can be arranged and/or oriented at angles of e.g. 90° relative to each other, for instance.

As such, the irradiation device 30 can be generally configured to generate at least four individual light sheets LS1 - LS4, wherein the main extension direction of a first individual light sheet LS1 extends at a first angle through the photocurable resin, the main extension direction of a second individual light sheet LS2 extends at angle of essentially 90° relative to the first individual light sheet LS1 through the photocurable resin, the main extension direction of a third individual light sheet LS3 extends at an angle of essentially 90° relative to the second individual light sheet LS2 through the photocurable resin, and the main extension direction of a fourth individual light sheet LS4 extends at an angle of essentially 90° relative to the third individual light sheet LS3 through the photocurable resin.

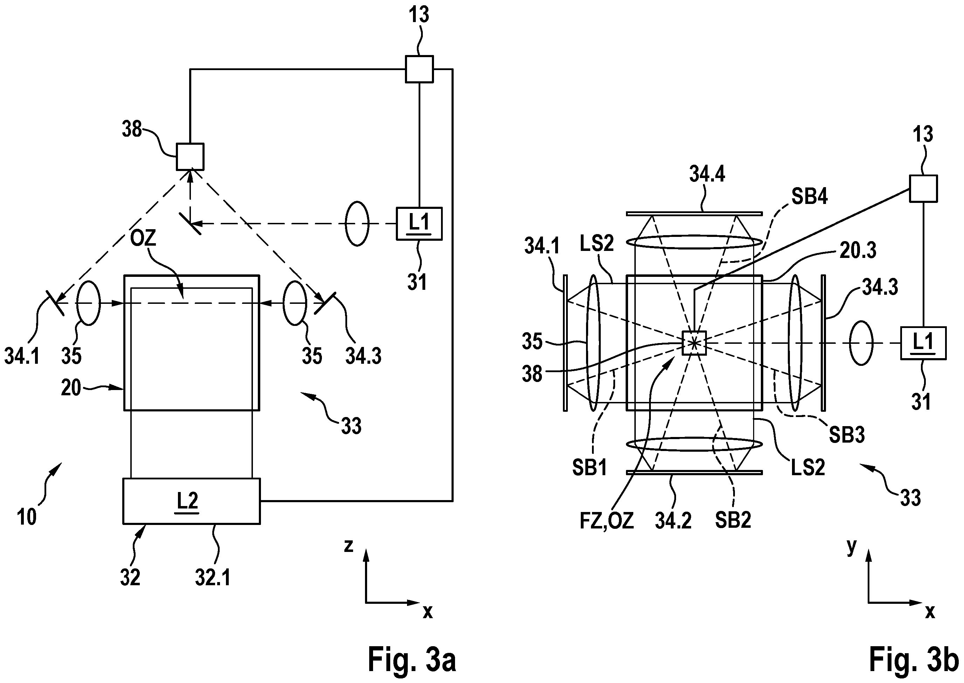

As indicated further above, the irradiation device 30 also comprises a second light source 32 of the light L2 of the second wavelength. The second light source 32 can generally form part of a light projector 32.1 configured to generate one or more light projections of the light L2 of the second wavelength. The one or more light projections of the light L2 of the second wavelength can comprise one or more images, particularly images corresponding to a cross-sectional geometry of a three-dimensional object to be printed, or a plurality of sequential light points, particularly light points each corresponding to a point of a cross-sectional geometry of a three-dimensional object to be printed, for instance. As is apparent from Fig. 2a, 3a, the one or more light projections of the light L2 of the second wavelength can intersect the at least four individual light sheets LS1 - LS4 generated by the light sheet generator 33 at a specific angle, particularly at an angle of 90°. As such, particularly given that the at least four individual light sheets LS1 - LS4 enter the working volume 11 through respective side-walls 20.1 - 20.4 or side-wall portions of the container 20, the one or more light projections of the light L2 of the second wavelength can enter the working volume through a bottom-wall 20.5 of the container 20 (as exemplarily shown in Fig. 2a, 3a). The second light source 32 and the light projector 32.1 can thus, be arranged adjacent a bottom-wall 20.5 of the container 20 such that the light L2 of the second wavelength can enter the working volume 11 through the bottom-wall 20.5 of the container 20.

Generally, the one or more light projections can enter the working volume 11 at or through a specific side of the working volume 11, such as e.g. a top-side or a bottom-side of working volume 11. The light sheet generator 33 can be arranged at a side of the working volume 11 which is different from the specific side of the working volume 11. As exemplarily shown in Fig. 1 - 3, the light sheet generator 33 can be arranged at a side of the working volume 11 which is opposite the specific side of the working volume 11. Fig. 1 - 3 specifically show that the second light source 32 and the light projector 32.1, respectively can be arranged at a bottom-side of the working volume 11 (below the working volume 11) and thus, adjacent to a bottom-wall 20.5 of the container 20 and the light sheet generator 33 can be arranged at a top-side of the working volume 11 (above the working volume) and thus, adjacent to a top-wall 20.6 of the container 20. Also, an inverse configuration is conceivable though.

The light sheet generator 33 can be configured to generate the at least four individual light sheets LS1 - LS4 simultaneously (see e.g. Fig. 2, 3) or sequentially (see e.g. Fig. 1). Hence, the light sheet generator 33 can be configured to generate the at least four individual light sheets LS1 - LS4 simultaneously which can be beneficial for generating a high light intensity at least in the light sheet overlapping zone OZ which can positively influence the curing or solidification behavior of the photocurable resin, for instance. Alternatively, the light sheet generator 33 can be configured to generate the at least four individual light sheets LS - LS4 sequentially, i.e. with a temporal and/or spatial offset, which can be beneficial for generating a variable light intensity at least in the light sheet overlapping zone OZ which can also positively influence, particularly control, the curing or solidification behavior of the photocurable resin, for instance.

The exemplary embodiment of Fig. 1 shows that the light sheet generator 33 can be or comprise at least one beam deflection device 37, particularly a controllable beam deflection device, configured to deflect a light beam of the light L1 of the first wavelength towards the optical reflector 34 or respective optical reflector elements 34.1 - 34.4, respectively. Embodiments of a respective beam deflection device 37 can be or comprise an optical scanner device, particularly a galvo-scanner device, or a digital micro-mirror device, for instance. The provision of a respective beam deflection device 37 does not only enable a deliberate deflection of a light beam of the light L1 of the first wavelength towards different positions of a specific optical reflector element 34.1 - 34.4 but can also enable a deliberate deflection of a light beam of the light L1 of the first wavelength towards different optical reflector elements 34.1 - 34.4 which enables a concerted generation of individual light sheets LS1 - LS4 which enter the working volume 11 from different directions. As an example which is apparent from Fig. 1, the beam deflection device 37 can be configured to sequentially deflect a light beam of the light L1 of the first wavelength to and/or across different optical reflector elements 34.1 - 34.4 of the optical reflector 34. Particularly, Fig. 1 indicates that the beam deflection device 37 can be configured to sequentially deflect a light beam of the light L1 of the first wavelength to and/or across four different optical elements 34.1 - 34.4 of the optical reflector 34, wherein a first light sheet LS1 is generated by deflecting the light beam, which can also be widened, e.g. in a sheet-like configuration, via the beam deflection device 37, towards and/or across a first optical reflector element 34.1 and reflecting the (widened) first light beam towards a first side of the working volume 11 and a first side-wall 20.1 or side-wall portion of the container 20, respectively, a second light sheet LS2 is generated by deflecting the light beam, which can also be widened, e.g. in a sheet-like configuration, via the beam deflection device 37, towards and/or across a second optical reflector element 34.2 and reflecting the (widened) light beam towards a second side of the working volume 11 and a second side-wall 20.2 or side-wall portion of the container 20, respectively, a third light sheet LS3 is generated by deflecting the light beam, which can also be widened, e.g. in a sheet-like configuration, via the beam deflection device 37, towards and/or across a third optical reflector element 34.3 and reflecting the (widened) light beam towards a third side of the working volume 11 and a third side-wall 20.3 or side-wall portion of the container 20, respectively, and a fourth light sheet LS4 is generated by deflecting the light beam, which can also be widened, e.g. in a sheet-like configuration, via the beam deflection device 37, towards and/or across a fourth optical reflector element 34.4 and reflecting the (widened) light beam towards a fourth side of the working volume 11 and a fourth side-wall 20.4 or side-wall portion of the container 20, respectively.

The controllable beam deflection device 37 can also be configured to generate a light beam having a specific beam profile which can correspond to or result in a specific intensity distribution of one, more, or all of the at least four individual light sheets LS1 - LS4 generated from that light beam. As an example, the controllable beam deflection device 37 can be controlled, e.g. via the controller 13, to generate or modify a beam profile of an incident light beam which can result in a specific intensity distribution of one, more, or all of the at least four individual light sheets LS1 -LS4 generated from that light beam. As another example, the controllable beam deflection device 37 can be controlled, e.g. via the controller 13, by applying grey-scaling to an incident light beam which can result in a specific intensity distribution of one, more, or all of the at least four individual light sheets LS1 - LS4 generated from that light beam. Particularly, the beam deflection device can be a scanning device with adjustable scanning speed, e.g. movement speed of a mirror of a galvo-scanner, wherein the controller varies the scanning speed to generate a specific intensity distribution. Alternatively, the incident light can be applied as pulsed light, e.g. with varying intensity, such that a specific intensity is applied for each deflection position.

Hence, the apparatus 10 can generally comprise at least one intensity distribution device configured to distribute, particularly substantially homogenously distribute, the intensity of the light L1 of the first wavelength, throughout at least parts of the working volume 11, particularly in the or a light sheet overlapping zone OZ of the at least four individual light sheets LS - LS4. As indicated above, the at least one intensity distribution device can also be embodied by a respective controllable beam deflection device 37 which can be controlled, e.g. via the controller 13, e.g. by applying grey-scaling to an incident light beam which can result in a specific intensity distribution of one, more, or all of the at least four individual light sheets LS1 - LS4 generated from that light beam. Further conceivable embodiments of a respective intensity distribution device can be or comprise an optical intensity filter, e.g. a variable neutral density filter, which can be arranged in the optical path of the light L1 of the first wavelength between the first light source 31 and the container 20, respectively.

The beam deflection device 37 can be generally configured to generate an at least partially non-collimated light beam from the light beam of the first wavelength and deflect the at least partially non-collimated light beam towards the optical reflector 34 or one or more optical reflector elements 34.1 - 34.4 of the optical reflector 34, respectively. Particularly, the beam deflection device 37 can be configured to generate a light beam which is not-collimated in a single spatial direction, e.g. to form a widened light beam having a line-configuration or a sheet-like configuration, respectively. Generating an at least partially non-collimated light beam can be beneficial for generating the at least four individual light sheets LS1 - LS4.

As shown in the exemplary embodiments of Fig. 2 and 3, the light sheet generator 33 can, additionally or alternatively, be or comprise at least one beam splitting device 38 configured to, particularly temporally and/or spatially, split a light beam of the light L1 of the first wavelength into at least four split light beams SB1 - SB4 and deflect the at least four split light beams SB1 - SB4 towards the optical reflector 34 or respective optical reflector elements 34.1 - 34.4 of the optical reflector 34, respectively. Hence, the at least four individual light sheets LS1 - LS4 can be generated by splitting a single light beam in at least four split light beams SB1 - SB4 which are then used for generating the respective at least four individual light sheets LS1 - LS4. As is apparent from Fig. 2b, 3b, a first split light beam SB1 generated by the beam splitting device 38 can be used to generate a first light sheet LS1, a second split light beam SB2 generated by the beam splitting device 38 can be used to generate a second light sheet LS2, a third split light beam SB3 generated by the beam splitting device 38 can be used to generate a third light sheet LS3, and a fourth split light beam SB4 generated by beam splitting device can be used to generate a fourth light sheet LS4, for instance.

In exemplary embodiments with multiple beam splitting devices 38, a first beam splitting device 38 can be configured to split a light beam of the light L1 of the first wavelength into a first and a second split light beam and at least one further beam splitting device 38 can be configured to split the first split light beam into a third and a fourth split light beam and the at least one further beam splitting device 38 can be configured to split the second split light beam into a fifth and a sixth split light beam, wherein the third, fourth, fifth, and sixth split light beams can be used for generating the respective at least four individual light sheets. Hence, in exemplary embodiments with multiple beam splitting devices 38, the multiple beam splitting devices 38 can be arranged in series, for instance.

In further exemplary embodiments with multiple beam splitting devices 38, a first beam splitting device 38 can be configured to split a first light sheet of the light L1 of the first wavelength into a first and a second split light sheet and at least one further beam splitting device 38 can be configured to split the first split light sheet into a third and a fourth split light sheet and the at least one further beam splitting device 38 can be configured to split the second split light sheet into a fifth and a sixth split light sheet, wherein the third, fourth, fifth, and sixth split light sheet can be used for generating the respective at least four individual light sheets. Hence, in exemplary embodiments with multiple beam splitting devices 38, the multiple beam splitting devices 38 can be arranged in series, for instance.

Each respective beam splitting device 38 can comprise at least one of the following optical elements: one or more diffractive optical elements, one or more transmissive optical elements, one or more reflective optical elements, such as e.g. mirror elements, particularly micro-mirror elements, one or more axicons, one or more mirrors pyramid having a polygonal base shape, one or more optical fibers, particularly optical fibers having an acute free (distal) end, for instance. Each of these optical elements can be moveable in at least one degree of freedom of motion, such as e.g. a translational and/or a rotational degree of freedom of motion, for instance. A respective motion axis, e.g. a translational and/or a rotational axis, can correspond to the extension axis of the incident light beam, for instance. As such, at least one drive device, such as e.g. a motor, can be assigned to one or more respective optical elements to effect a motion of the respective optical elements in the respective degree of freedom of motion. Operation of the at least one drive device can be controlled by at least one controller of the irradiation device and/or a superordinate controller of the apparatus, respectively, for instance.

In exemplary embodiments in which the beam splitting device 38 comprises one or more reflective optical elements, such as e.g. mirror elements, particularly micro-mirror elements, the beam splitting device 38 can be or comprise a digital light projection device or a digital micromirror device, for instance. As such, a digital light projection device or a digital micromirror device can be used as a respective beam splitting device 38, for instance which can enable generating individual light sheets LS1 - LS4 of varying properties, e.g. with respect to the intensity distribution, for instance. As an example, a digital light projection device or a digital micromirror device can generate or project at least four lines which are then optically processed, e.g. by beam shaping or beam widening, to generate at least four individual light sheets LS1 - LS4 which are then directed into the working volume 11.

The beam splitting device 38 can be configured to distribute the intensity of the light of the first wavelength to the at least four individual light sheets LS1 - LS4. Hence, each of the at least four individual light sheets LS1 - LS4 can comprise a fraction, particularly an equal fraction, of the intensity of the light beam or light sheet from which the at least four individual light sheets LS1 - LS4 have been generated. As such, the beam splitting device 38 can also be used to control the intensity of the respective at least four individual light sheets LS1 - LS4 by applying a concerted distribution of the intensity of the light L1 of the first wavelength to the at least four individual light sheets LS1 - LS4. Particularly, two or more beam splitting devices 38 can be provided, particularly in a series arrangement, wherein each beam splitting device 38 is configured to split an incoming light beam or light sheet of the light L1 of the first wavelength having a given intensity in a first split light beam or first split light sheet having ca. 50% of the intensity of the incident light beam or light sheet and in a second split light beam or second split light sheet having ca. 50% of the intensity of the incident light beam or light sheet.

The particular difference between the exemplary embodiments of Fig. 2 and Fig. 3 is the angle at which the beam deflection device 38 emits the split light beams SB1 - SB4 and the respective number an orientation of optical reflector elements 34.1 - 34.4. Particularly, the exemplary embodiment of Fig. 2 shows that, see Fig. 2a, intermediate optical reflector elements can be provided which reflect respective split light beams SB1 - SB4 towards the optical reflector elements 34.1 - 34.4 which reflect the individual light sheets LS1 - LS4 towards the working volume 11, whereas the exemplary embodiment of Fig. 3 shows that, see Fig. 3a, that beam splitting device 38 can directly direct the split light beams SB1 - SB4 towards the optical reflector elements 34.1 - 34.4 which reflect the individual light sheets LS1 - LS4 towards the working volume 11.

As indicated above, one or more further optical elements, such as e.g. beam collimating elements 35, beam focusing elements, beam widening elements 36, etc., can be assigned to each respective optical reflector element 34.1 - 34.4 of the optical reflector 34. Hence, the apparatus 10 can generally comprise at least one collimating optic comprising one or more collimating elements 35, such as e.g. collimating lenses, assigned to the light sheet generator 33 and/or to the at least one optical reflector 34. A respective collimating optic can be particularly, configured to generate light sheets of (substantially) parallel light beams. A respective collimating optic can thus, be configured to generate light sheets LS1 - LS4 of defined optical properties which can be beneficial for printing three-dimensional objects of high-dimensional accuracy. As is apparent from the Fig., a respective collimating optic can be arranged in the optical path of the light L1 of the first wavelength downstream of the optical reflector 34 or respective optical reflector elements 34.1 - 34.4, for instance.

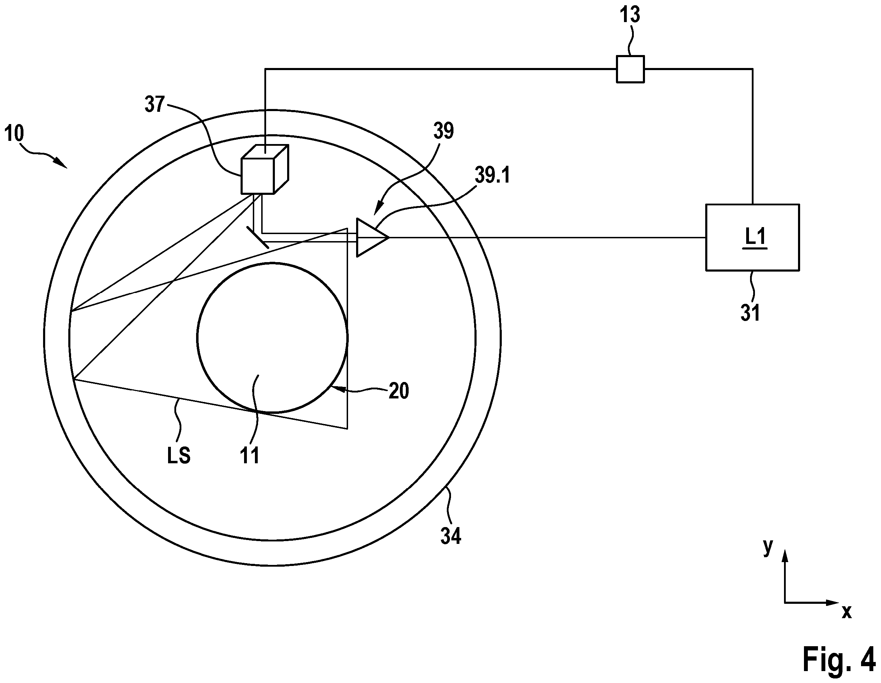

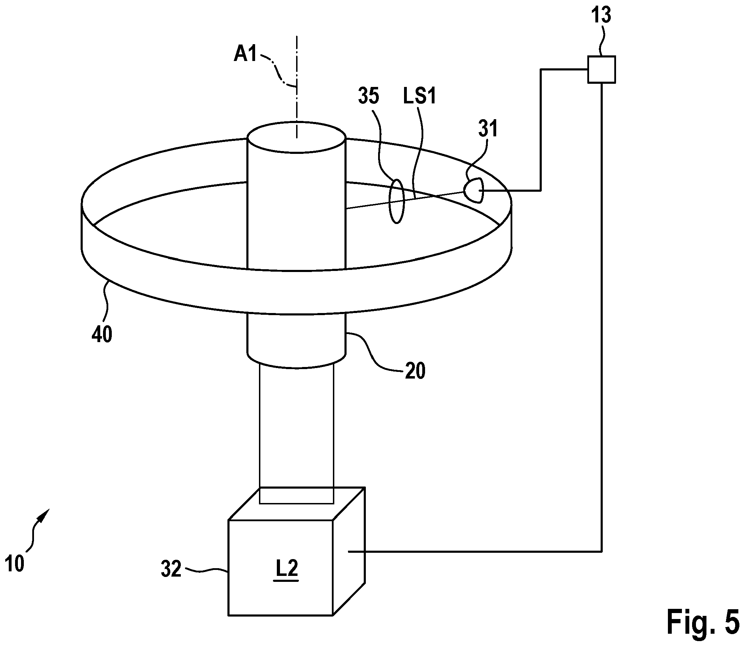

As is apparent from the exemplary embodiment of Fig. 4, the apparatus 10 can comprise at least one beam shaping device 39 configured to provide a light beam emitted by the first light source 31 with a modified beam shape, particularly a modified beam shape in which the light beam is converging or diverging in at least one spatial direction. As such, a respective beam shaping device 39 can be configured to change the shape of a light beam emitted by the first light source 31 so as to generate a light beam which converges or diverges in at least one spatial direction. A respective converging or diverging light beam can then, be processed, e.g. by a respective beam deflection device 37, to generate the at least four individual light sheets LS1 - LS4, for instance. Fig. 5 shows an exemplary configuration in which a respective beam shaping device 39 is arranged in the optical path of the light L1 of the first wavelength upstream of the light sheet generator 33, particularly the beam deflection device 37, and upstream the optical reflector 34 or respective optical reflector elements 34.1 - 34.4, for instance. However, a downstream configuration is generally conceivable as well.

The at least one beam shaping device 39 can comprise an optical element 39.1 rotatable about an axis corresponding to the extension direction of the incident light beam of the light L1 of the first wavelength incident on the beam shaping device 39. The optical element 39.1 can be a transmissive or a reflective optical element, such as e.g. a mirror element, particularly micro-mirror element, an axicon, a mirror pyramid having a polygonal base shape, an optical fiber, particularly an optical fiber having an acute free (distal) end, for instance.

Fig. 4 further shows a configuration of an optical reflector 34 with a single optical reflector element 34 having a ring-shape. Notably, also configurations of an optical reflector 34 with multiple ring-segment shaped optical reflector elements 34.1 - 3.4x would be conceivable.

As is apparent from the exemplary embodiment of Fig. 5, the first light source 31 can also be arranged on a surface, particularly an inner diameter surface, of a ring or ring-segment, wherein the ring or ring-segment at least partially surrounds the working volume 11 and a container 20 delimiting the working volume 11, respectively. Hence, multiple discrete rings or ring-segments, each facing a side wall of the container 20 delimiting the working volume 11, which surround at least a portion of the container 20 can be provided. The ring or ring-segment(s) can be generally deemed a carrier structure 40 configured to carry the first light source 31 such that it can emit light of the first wavelength into the working volume 11. Particularly, the ring or ring-segment and the carrier structure 40, respectively can be rotatable about a central axis A1 of the working volume 11 or the container 20, respectively. As such, each light sheet of the at least four individual light sheets LS1 LS4 can be generated by a rotational movement of the first light source 31 relative to the working volume 11 and the container 20, respectively. As an example, an individual light sheet LS1 - LS4 can be generated by a movement of the first light source 31 about a specific angular extension, such as e.g. an angular extension of 90°. A full rotation of the light source 31 about the working volume 11 can thus, generate four individual light sheets LS1 -LS4. A drive device, such as e.g. a motor, can be assigned to the ring or rings-segment(s) and the carrier structure 40, respectively to effect a motion, particularly a rotational motion, of the ring or rings-segment(s) about the working volume 11 or container 20, respectively. Operation of the at least one drive device can be controlled by the superordinate controller 13 of the apparatus 10, for instance.

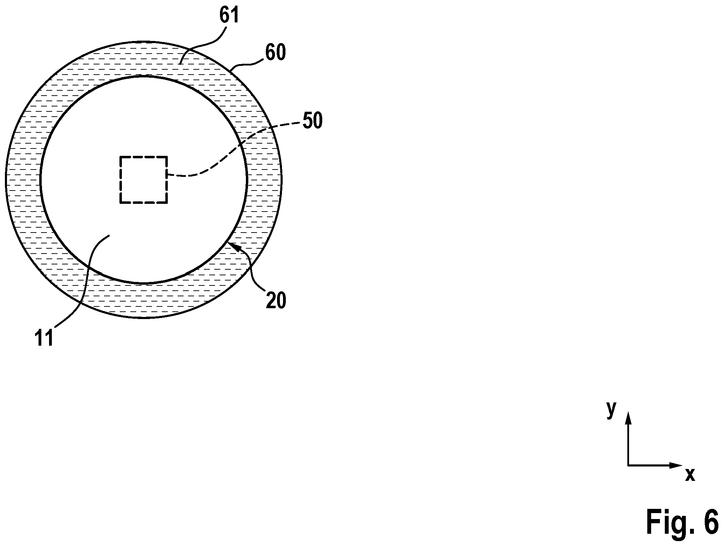

As is apparent from the exemplary embodiment of Fig. 6, the working volume 11 can be defined by a container 20 having a rotationally symmetric shape, wherein the container 20 is arranged within an outer container 60, wherein the outer container 60 comprises a refractive index matching medium 61. Using a container 20 having a rotationally symmetric shape and arranging the container 20 within an outer container 60 which comprises a refractive index matching medium is a measure to avoid possible undesired optical effects, such as e.g. refractive effects, which might compromise the intensity of the light L1 of the first wavelength inside the working volume 11 and thus, inside the photocurable resin. A respective index matching medium can be a fluid having the same or at least a similar refractive index as the wall of the container and/or the photocurable resin.

In further exemplary embodiments, the apparatus 10 can comprise at least one light blocking element (not shown) configured to absorb or block the light L2 of the second wavelength, wherein the at least one light blocking element is arranged to avoid that the light L2 of the second wavelength is directed to the light sheet generator 33. As an example, the at least one light blocking element can be arranged above the working volume 11 when also the light sheet generator 33 is arranged above the working volume 11. As such, undesired interactions of the light L2 of the second wavelength with e.g. the light sheet generator 33 caused by that the light L2 of the second working volume which exits the working volume 11 at a top-side of the working volume 11 can be avoided. A respective light blocking element can thus, be generally arranged to avoid that light L2 of the second wavelength enters the optical path of the light L1 of the first wavelength outside the working volume 11.

The apparatuses 10 of the exemplary embodiments enable implementation of a method for volumetric 3d-printing a three-dimensional object by multi-color photopolymerization, particularly by dual-color photopolymerization, of a photocurable resin, which method comprises at least irradiating a photocurable resin within a working volume 11 with light L1 of a first wavelength and light L2 of a second wavelength, different from the first wavelength, wherein the light L1 of the first wavelength and the light L2 of the second wavelength intersect in at least one formation zone FZ, wherein an irradiation device 30 is used which comprises a first light source 31, wherein the first light source 31 is configured to generate a light beam of the light L1 of the first wavelength, and a light sheet generator 33 is used, wherein the light sheet generator 33 is configured to process a light beam of the light L1 of the first wavelength generated by the first light source 31 to generate at least four individual light sheets LS1 - LS4 of the light L1 of the first wavelength.

As is further apparent from Fig. 6 (which is a top-view of an apparatus 20), at least one intensity distribution body 50 can be inserted in the photocurable resin within the working volume 11, wherein the at least one intensity distribution body 50 is configured to distribute the intensity of the light L1 of the first and/or second wavelength l2 within the working volume 11 and thus, configured to minimize or reduce zones of high intensity, e.g. by deflecting the light L1, L2 of the first and/or second wavelength from inner regions of the working volume 11 towards outer regions of the working volume 11. A respective intensity distribution body 50 can e.g. have a rotationally-symmetric shape, particularly in connection with a working volume 11 which also has a rotationally-symmetric shape and a rotationally-symmetric container 20 delimiting the working volume 11, respectively. As an example, a respective intensity distribution body can have a rod-like configuration with a rotationally-symmetric cross-section. A respective intensity distribution body can be transmissive, reflective, or absorbing with respect to the light L1, L2 of the first and/or the second wavelength, for instance. A respective intensity distribution body 50 can be integrated into and thus, form part of a three-dimensional object to be printed.

In either case, a respective beam deflection device 37 and a respective beam splitting device 38 can be the same optical device. As such, a beam deflection device 37 can also comprise the functionality of a beam splitting device 38 and vice versa. As an example, the beam deflection device 37 of Fig. 1 can also serve a beam splitting function as a beam splitting device 38.

While the exemplary embodiments shown in the Fig. relate to the generation of at least four individual light sheets, the exemplary embodiments could also be used to generate at least three individual light sheets only. Hence, all annotations made in connection with the exemplary embodiments shown in the Fig. also generally apply to the generation of at least three individual light sheets only.

One, more, or all aspects mentioned in connection with at least one embodiment can be combined with one, more, or all aspects mentioned in connection with at least one other embodiment.

## Claims

1. An apparatus for volumetric 3d-printing a three-dimensional object by multi-color photopolymerization of a photocurable resin, which comprises:
- a working volume for receiving a photocurable resin,
- an irradiation device for irradiating a photocurable resin within the working volume with light of a first wavelength and light of a second wavelength, different from the first wavelength, wherein the light of the first wavelength and the light of the second wavelength intersect in at least one formation zone, wherein the irradiation device comprises:
- at least one first light source, wherein the at least one first light source is configured to generate a light beam of the light of the first wavelength; and
- a light sheet generator, wherein the light sheet generator is configured to process a light beam of the light of the first wavelength generated by the at least one first light source to generate at least three individual light sheets, particularly at least four individual light sheets, of the light of the first wavelength.

2. The apparatus of claim 1, further comprising at least one optical reflector configured to direct the at least three individual light sheets towards the working volume such that each of the at least three individual light sheets enters the working volume at a specific angle and such that the at last three individual light sheets overlap in the working volume.

3. The apparatus of claim 1 or 2, wherein the irradiation device further comprises a light source of the light of the second wavelength and a light projector configured to generate light projections of the light of the second wavelength, wherein the light projections enter the working volume at a specific side of the working volume, particularly the bottom of the working volume or a side orthogonal to a side through which the light of the first wavelength enters the working volume, wherein optionally the light sheet generator is arranged at a side of the working volume opposite the specific side of the working volume, wherein the light sheet generator is particularly arranged above at least one side of the working volume, particularly above a side of the working volume opposite the specific side of the working volume.

4. The apparatus of any one of the preceding claims, wherein the light sheet generator is configured to generate the at least three individual light sheets simultaneously or sequentially.

5. The apparatus of any one of the preceding claims, wherein the light sheet generator comprises a beam deflection device, particularly an optical scanner device, configured to deflect a light beam of the light of the first wavelength towards the at least one optical reflector.

6. The apparatus of claim 5, wherein the beam deflection device is configured to generate a non-collimated light beam from the light beam of the first wavelength in at least one direction and deflect the non-collimated light beam towards the at least one optical reflector.

7. The apparatus of any one of the preceding claims, wherein the light sheet generator is or comprises at least one beam splitting device configured to split a light beam or light sheet of the light of the first wavelength into at least two, preferably four, split light beams or split light sheets and deflect the at least two, preferably four, split light beams or split light sheets towards the at least one optical reflector.

8. The apparatus of claim 7, wherein the at least one beam splitting device comprises at least one of the following: a diffractive optical element, a transmissive optical element, a reflective optical element, particularly an axicon, mirror pyramid having a polygonal base shape, a rotating mirror, an optical fiber, a digital micromirror device, etc.

9. The apparatus of any one of claims 8 or 9, wherein the at least one beam splitting device is configured to distribute the intensity of the light of the first wavelength to the at least three individual light sheets.

10. The apparatus of any one of the preceding claims, further comprising at least one collimating optic assigned to the light sheet generator and/or at least one collimating optic assigned to the at least one optical reflector.

11. The apparatus of any one of the preceding claims, further comprising at least one beam shaping device configured to provide a light beam emitted by the at least one first light source with a modified beam shape, particularly a modified beam shape in which the light beam is converging or diverging in at least one spatial direction, wherein the at least one beam shaping device particularly, is or comprises an optical element rotatable about an axis corresponding to the extension direction of a light beam of the light of the first wavelength incident on the at least one beam shaping device.

12. The apparatus of any one of the preceding claims, further comprising at least one intensity distribution device configured to distribute, particularly substantially homogenously distribute, the intensity of the light of the first wavelength, particularly the light of the first wavelength in an overlapping zone of the at least four individual light sheets, throughout at least parts of the working volume.

13. The apparatus of any one of the preceding claims, wherein the at least one first light source arranged on a surface, particularly an inner diameter surface, of a ring or ring-segment surrounding the working volume, wherein the ring or ring-segment is rotatable about the working volume.

14. The apparatus of any one of the preceding claims, wherein the light sheet generator is configured to generate the at least three light beams such that their main extension planes are parallel to a bottom-side of the working volume or a container delimiting the working volume, respectively.

15. The apparatus of any one of the preceding claims, further comprising at least one light blocking element configured to block the light of the second wavelength, wherein the at least one light blocking element is arranged above the working volume.
